# EUROPÄISCHE PATENTSCHRIFT

(11) **EP 4 014 702 B1**
(45) Veröffentlichungstag und Bekanntmachung des Hinweises auf die Patenterteilung: **21.08.2024**
(21) Anmeldenummer: 21213710.3
(22) Anmeldetag: 10.12.2021
(51) Int. Cl.: A01B 23/02, A01B 23/04, A01B 73/04

(54) **ZUSTREICH- UND EINEBNUNGSEINRICHTUNG**
CLOSING AND LEVELLING DEVICE
DISPOSITIF DE FERMENTURE ET DE NIVELLEMENT

(30) Priorität: 15.12.2020 DE 102020133613
(43) Veröffentlichungstag der Anmeldung: 22.06.2022
(73) Patentinhaber: Lemken GmbH & Co KG, 46519 Alpen (DE)
(72) Erfinder: Geraats, Marcel, 41334 Nettetal (DE); Bergerfurth, Dennis, 46459 Rees (DE)

(56) Entgegenhaltungen:
- JP-A- 2000 300 006
- US-A- 5 274 990

## Beschreibung

Die Erfindung betrifft eine Zustreich- und Einebnungseinrichtung zur Verwendung mit einer landwirtschaftlichen Bodenbearbeitungsmaschine nach dem Oberbegriff von Anspruch 1, und ein Verfahren zum Einstellen einer solchen Zustreich- und Einebnungseinrichtung, wenn sie mit einer landwirtschaftlichen Bodenbearbeitungsmaschine verwendet wird.

Bei landwirtschaftlichen Bodenbearbeitungsmaschinen, wenn diese in ihrer Betriebsposition auf Ackerflächen zum Einsatz kommen, besteht in der Regel ein Interesse an einer großen Arbeitsbreite, um möglichst große Flächen in einem Arbeitsgang zu bearbeiten und dadurch einen effizienten Einsatz dieser Maschinen zu erreichen. Eine solch möglichst große Arbeitsbreite findet ihre Grenzen dann, wenn die landwirtschaftliche Bodenbearbeitungsmaschine im öffentlichen Straßenverkehr bewegt wird und hierzu deren Komponenten bzw. Arbeitswerkzeuge in eine Transportposition zu überführen sind, in der eine Breite der Bodenbearbeitungsmaschine in der Regel nicht größer als 3 Meter sein darf. Dies gilt jedenfalls dann, wenn eine landschaftliche Bodenbearbeitungsmaschine auf öffentlichen Straßen ohne Begleitfahrzeug bzw. ohne Sondergenehmigung bewegt werden soll.

Nach dem Stand der Technik ist es bekannt, Bodenbearbeitungswerkzeuge bei landwirtschaftlichen Bodenbearbeitungsmaschinen einzuklappen oder hochzuschwenken, um dadurch die Arbeitsbreite in einer Transportposition, in der die Maschinen auf öffentlichen Straßen bewegt werden, zu vermindern. In der Regel sind hierzu hydraulische Antriebe oder separate Werkzeuge erforderlich, um die Arbeitswerkzeuge in die Transportposition mit verminderter Arbeitsbreite zu überführen. Derartige Mechanismen zum Klappen der Werkzeuge sind beispielsweise aus der JP 2000 300006 A und der US 5 274 990 A bekannt.

Aus DE 10 2014 204 688 A1 ist ein landwirtschaftliches Gerät zur Bodenbearbeitung bekannt, das eine Mehrzahl von länglichen Trägern aufweist, an denen jeweils Bodenbearbeitungswerkzeuge angebracht sind, die in einer Betriebsposition des Geräts den (Acker-)Boden in Eingriff nehmen. Im Hinblick auf ein Bewegen des landwirtschaftlichen Geräts im öffentlichen Straßenverkehr kann die Arbeitsbreite des Geräts in einer Transportposition dadurch vermindert werden, dass ein länglicher Träger bezüglich eines anderen Trägers entlang einer Längsrichtung der länglichen Träger verschoben wird, so dass ein Träger in dieser Stau- bzw. Transportposition hinter den anderen Träger geschoben ist. Alternativ oder zusätzlich kann vorgesehen sein, dass ein länglicher Träger bezüglich eines anderen Trägers um 180° umgeklappt wird. Ein solches Verschieben bzw. Umklappen eines länglichen Trägers relativ zu einem anderen Träger ist in Bezug auf die Ausgestaltung der Rahmenkonstruktion mechanisch aufwendig und unterliegt auch dem Nachteil von möglichen Betriebsstörungen, falls z.B. Gelenke verschmutzt oder defekt sein sollten.

Entsprechend liegt der Erfindung die Aufgabe zugrunde, bei einer landwirtschaftlichen Bodenbearbeitungsmaschine die Verminderung von deren Breite in Bezug auf daran angebrachte Bodenbearbeitungswerkzeuge in einer Transportposition mit einfachen Mitteln zu optimieren.

Die obige Aufgabe wird durch eine Zustreich- und Einebnungseinrichtung mit den Merkmalen von Anspruch 1, und durch ein Verfahren mit den in Anspruch 15 angegebenen Merkmalen gelöst. Vorteilhafte Weiterbildungen der Erfindung sind Gegenstand der abhängigen Ansprüche.

Eine erfindungsgemäße Zustreich- und Einebnungseinrichtung dient zur Verwendung mit einer landwirtschaftlichen Bodenbearbeitungsmaschine, und umfasst eine längliche Rahmeneinrichtung, die sich quer zur einer Fahrtrichtung der landwirtschaftlichen Bodenbearbeitungsmaschine erstreckt, und eine Mehrzahl von Zinkenelementen, die entlang der Rahmeneinrichtung angebracht sind und mit ihren jeweils unteren freien Enden in einer Betriebsposition der landwirtschaftlichen Bodenbearbeitungsmaschine in Kontakt mit einer Ackerfläche gebracht werden können. In einer Betriebsposition der landwirtschaftlichen Bodenbearbeitungsmaschine ragen randseitige Zinkenelemente, die an der Rahmeneinrichtung ganz links bzw. ganz rechts an einem Rand der Rahmeneinrichtung oder angrenzend hierzu angebracht sind, mit ihren unteren freien Enden über den Rand der Rahmeneinrichtung in Richtung von deren Längserstreckung hinaus. Insbesondere sind randseitige Zinkenelemente solche, welche am Rand der Transportbreite der landwirtschaftlichen Maschine angeordnet sind beziehungsweise die zulässigen Transportabmessungen beeinflussen. Zumindest ein randseitiges Zinkenelement ist in einem Abschnitt angrenzend zu seiner Anbringung an der Rahmeneinrichtung stabförmig ausgebildet. Dieses randseitige Zinkenelement kann ausgehend von der Betriebsposition der landwirtschaftlichen Bodenbearbeitungsmaschine um eine vorzugsweise aufrecht verlaufende Längsachse seines stabförmigen Abschnitts verdreht werden. Hierdurch wird für die landwirtschaftliche Bodenbearbeitungsmaschine eine Transportposition erreicht, in der das untere freie Ende des randseitigen Zinkenelements über den zugeordneten Rand der Rahmeneinrichtung nicht seitlich hinausragt und/oder in Richtung einer Mitte der Rahmeneinrichtung ausgerichtet ist. Eine aufrecht verlaufende Längsachse definiert sich insbesondere durch eine Ebene, in welcher die Längsachse des stabförmigen Abschnitts des Zinkenelementes liegt. Diese Ebene steht vorzugsweise annähernd senkrecht zur Bodenboberfläche. Weiterhin verläuft die Ebene zumindest etwa annähernd parallel zur Fahrrichtung der landwirtschaftlichen Bodenbearbeitungsmaschine. Vorzugsweise ist die Ebene senkrecht zur länglichen Rahmeneinrichtung ausgerichtet, an welcher die Mehrzahl von Zinkenelementen angeordnet ist. Insbesondere erfasst die Anordnung der aufrecht verlaufenden Längsachse eine vertikale Anordnung zur Bodenoberfläche sowie in Fahrtrichtung nach vorne oder hinten geneigte Positionen, insbesondere eine schleppende Anordnung.

Die vorliegende Erfindung sieht in gleicher Weise auch ein Verfahren zum Einstellen einer Zustreich- und Einebnungseinrichtung vor, wenn diese in Verbindung mit einer landwirtschaftlichen Bodenbearbeitungsmaschine verwendet wird.

Bei diesem Verfahren wird zumindest ein randseitiges Zinkenelement, das an einer länglichen Rahmeneinrichtung an einem Rand davon ganz links oder ganz rechts angebracht ist, um die Längsachse eines stabförmigen Abschnitts des randseitigen Zinkenelements verdreht, so dass dadurch für die landwirtschaftliche Bodenbearbeitungsmaschine eine Transportposition erreicht wird, in der ein unteres freies Ende des randseitigen Zinkenelements über den zugeordneten Rand der Rahmeneinrichtung nicht seitlich hinausragt und/oder in Richtung einer Mitte der Rahmeneinrichtung ausgerichtet ist.

Der Erfindung liegt die wesentliche Erkenntnis zugrunde, dass eine Verminderung der Arbeitsbreite einer landwirtschaftlichen Bodenbearbeitungsmaschine, wenn daran die erfindungsgemäße Zustreich- und Einebnungseinrichtung angebracht ist, dadurch erreicht wird, dass zumindest ein randseitiges Zinkenelement, vorzugsweise beide randseitige Zinkenelemente, um die Längsachse des zugehörigen stabförmigen Abschnitts verdreht wird/werden, so dass ein unteres freies Ende davon beispielsweise in Richtung einer Mitte der Rahmeneinrichtung ausgerichtet ist, jedenfalls nicht weiter seitlich über den zugeordneten Rand der Rahmeneinrichtung hinausragt. Ein solches Verdrehen eines randseitigen Zinkenelements kann vorteilhaft ohne die Verwendung von separatem Werkzeug vorgenommen werden, beispielsweise von Hand bzw. manuell durch eine Bedienperson.

Im Zusammenhang mit dem vorstehend genannten Verdrehen eines randseitigen Zinkenelements, um dieses in eine Transportposition zur Verminderung der Arbeitsbreite der landwirtschaftlichen Bodenbearbeitungsmaschine zu überführen, besteht ein weiterer Vorteil der Erfindung darin, dass die längliche Rahmeneinrichtung starr ausgebildet sein kann, d.h. ohne verschiebliche oder klappbare Teile. Dies vereinfacht die Konstruktion der länglichen Rahmeneinrichtung und führt zu geringen Herstellungskosten.

Für das Verdrehen eines randseitigen Zinkenelements, um dessen unteres freies Ende in die Transportposition zu überführen, ist es zweckmäßig, dass die Längsachse des stabförmigen Abschnitts dieses Zinkenelements im Wesentlichen aufrecht verläuft. Durch eine solche Anordnung des stabförmigen Abschnitts des randseitigen Zinkenelements ist gewährleistet, dass ein Verdrehen des stabförmigen Abschnitts um eine aufrechte Achse erfolgt, wodurch die gewünschte Positionsveränderung des unteren freien Endes des randseitigen Zinkenelements im gewünschten Maße erreicht wird.

In vorteilhafter Weiterbildung der Erfindung können Befestigungsmittel vorgesehen sein, mit denen ein randseitiges Zinkenelement sowohl in der Betriebsposition als auch in der Transportposition der landwirtschaftlichen Bodenbearbeitungsmaschine bezüglich der Rahmeneinrichtung lösbar festgelegt werden kann. Zwecks einer einfachen Verstellung des randseitigen Zinkenelements zwischen der Betriebsposition und der Transportposition ist es von Vorteil, wenn diese Befestigungsmittel werkzeugfrei, d.h. ohne den Einsatz von separatem Werkzeug, betätigt werden können. Dies versetzt eine Bedienperson vorteilhaft in die Lage, jederzeit - bei Bedarf - ein randseitiges Zinkenelement von der Betriebsposition in die Transportposition (oder umgekehrt) überführen zu können, ohne dabei auf separates Werkzeug angewiesen zu sein. Zweckmäßigerweise können die besagten Befestigungsmittel als Klemmmittel oder Spannmittel ausgebildet sein, beispielsweise in Form einer Handschraube oder Handmutter, oder in Form einer Flügelschraube oder Flügelmutter, ebenso auch in Form eines Exzenter- oder Totpunkthebels, wodurch ein Betätigen von Hand insbesondere ohne Werkzeug in einfacher Weise möglich ist.

In vorteilhafter Weiterbildung der Erfindung können die genannten Befestigungsmittel an einer Aufnahmeeinrichtung vorgesehen sein, die an der länglichen Rahmeneinrichtung angebracht ist. In diesem Zusammenhang wird darauf hingewiesen, dass ein randseitiges Zinkenelement, zumindest dann, wenn die Befestigungsmittel gelöst sind, innerhalb dieser Aufnahmeeinrichtung derart aufgenommen ist, dass es mit seinem stabförmigen Abschnitt um dessen Längsachse verdreht werden kann. Hierdurch ist dann eine Verstellung dieses randseitigen Zinkenelements zwischen der Betriebsposition und der Transportposition der landwirtschaftlichen Bodenbearbeitungsmaschine gewährleistet.

In vorteilhafter Weiterbildung der Erfindung sind die genannten Befestigungsmittel in der Weise ausgebildet, dass - wenn diese Befestigungsmittel aktiviert sind - dann ein randseitiges Zinkenelement mittels der Aufnahmeeinrichtung relativ zur Rahmeneinrichtung festgelegt oder festgeklemmt ist. Für diesen Fall ist dann ein Bewegen dieses randseitigen Zinkenelements um die Längsachse des zugehörigen stabförmigen Abschnitts blockiert, in Folge dessen sich auch eine Position des unteren freien Endes des randseitigen Zinkenelements relativ zur Rahmeneinrichtung nicht verändern kann. Ergänzend und/oder alternativ sind die Befestigungsmittel dahingehend ausgestaltet, dass - wenn sie aktiviert sind - ein Bewegen des randseitigen Zinkenelements entlang der Längsachse des stabförmigen Abschnitts blockiert ist. Dies bedeutet, dass damit auch eine Höhenposition des unteren freien Endes des randseitigen Zinkenelements relativ zur Rahmeneinrichtung unveränderlich ist.

In vorteilhafter Weiterbildung der Erfindung ist angrenzend an den stabförmigen Abschnitt eines randseitigen Zinkenelements vorzugsweise an einem oberen freien Ende davon ein flächiger Anlagebereich ausgebildet. Ergänzend oder alternativ kann vorgesehen sein, dass angrenzend an den stabförmigen Abschnitt eines randseitigen Zinkenelements vorzugsweise an einem oberen freien Ende davon sich ein Anlagebereich fortsetzt. Vorzugsweise bilden hierbei eine Mittellinie des Anlagebereichs und die Längsachse des stabförmigen Abschnitts des randseitigen Zinkenelements eine gemeinsame Ebene, mit der die Befestigungsmittel bei ihrer Aktivierung in Wechselwirkung gelangen, beispielsweise durch Formschluss.

In vorteilhafter Weiterbildung der Erfindung hat die vorstehend genannte gemeinsame Ebene die Funktion, dass damit das randseitige Zinkenelement in der Betriebsposition der landwirtschaftlichen Bodenbearbeitungsmaschine mit dem Anlagebereich in der Aufnahmeeinrichtung durch die Befestigungsmittel festgeklemmt wird. In Folge des resultierenden Formschlusses zwischen dem Anlagebereich und der Aufnahmeeinrichtung ist dann eine Rotation des stabförmigen Abschnitts des randseitigen Zinkenelements um seine Längsachse blockiert. Dies führt zu dem Vorteil, dass auch große Torsionskräfte, die im Betrieb der landwirtschaftlichen Bodenbearbeitungsmaschine durch einen Kontakt mit dem Ackerboden auf das randseitige Zinkenelement einwirken können, dann wirkungsvoll über die Aufnahmeeinrichtung in die angrenzende Rahmeneinrichtung abgeleitet werden.

In vorteilhafter Weiterbildung der Erfindung kann an der Rahmeneinrichtung ein Anschlagsbereich ausgebildet sein. Dieser Anschlagsbereich hat die Funktion, dass damit in der Betriebsposition der landwirtschaftlichen Bodenbearbeitungsmaschine, insbesondere wenn diese in Fahrtrichtung über eine Ackerfläche bewegt wird, der vorzugsweise flächige Anlagebereich des randseitigen Zinkenelements in Wechselwirkung gelangt, derart, dass dadurch ein Verdrehen des randseitigen Zinkenelements um die Längsachse seines stabförmigen Abschnitts blockiert ist. Anders ausgedrückt, wird durch einen Kontakt des Anlagebereichs des randseitigen Zinkenelements mit dem an der Rahmeneinrichtung ausgebildeten Anschlagsbereich ein ungewünschtes Verdrehen des randseitigen Zinkenelements um die Längsachse seines stabförmigen Abschnitts automatisch verhindert, wodurch eine betriebssichere Stellung des randseitigen Zinkenelements in der Betriebsposition der landwirtschaftlichen Bodenbearbeitungsmaschine und auch eine Ableitung von Torsionskräften in die Rahmeneinrichtung gewährleistet ist.

In vorteilhafter Weiterbildung der Erfindung kann der Anlagebereich dadurch ausgebildet sein, dass das randseitigen Zinkenelements an seinem oberen freien Ende umgebördelt oder gebogen ist. Zweckmäßigerweise verläuft hierbei ein Endbereich des flächigen Anlagebereichs in etwa parallel zur Längsachse des stabförmigen Abschnitts des randseitigen Zinkenelements, woraus die bereits genannte gemeinsame Ebene resultiert, mittels der ein Formschluss zwischen dem Anlagebereich und der Aufnahmeeinrichtung möglich ist.

In vorteilhafter Weiterbildung der Erfindung können in der Aufnahmeeinrichtung zueinander verlaufende Vertiefungen ausgebildet sein, mit denen die geraden bzw. sich parallel erstreckenden Teile des umgebördelten oder umgebogenen Bereichs des randseitigen Zinkenelements in der Betriebsposition der landwirtschaftlichen Bodenbearbeitungsmaschine in Wechselwirkung gebracht werden können. Dies bedeutet, dass diese Teile des umgebördelten oder umgebogenen Bereichs des randseitigen Zinkenelements dann in den Vertiefungen der Aufnahmeeinrichtung aufgenommen sind, zwecks einer gewünschten Festlegung des randseitigen Zinkenelements in der Betriebsposition der landwirtschaftlichen Bodenbearbeitungsmaschine. Alternativ hierzu kann vorgesehen sein, dass in der Aufnahmeeinrichtung zumindest eine Erhebung ausgebildet ist, die sich in der Betriebsposition der landwirtschaftlichen Bodenbearbeitungsmaschine zwischen den sich parallel erstreckenden Teile des umgebördelten oder umgebogenen Bereichs des randseitigen Zinkenelements hindurch erstreckt. Jedenfalls ist durch die besagten Vertiefungen oder die zumindest eine Erhebung in der Aufnahmeeinrichtung gewährleistet, dass damit der Anlagebereich des randseitigen Zinkenelements formschlüssig in der Betriebsposition der landwirtschaftlichen Bodenbearbeitungsmaschine festgeklemmt wird, was sich vorteilhaft auf eine betriebssichere Stellung des randseitigen Zinkenelements in der Betriebsposition der landwirtschaftlichen Bodenbearbeitungsmaschine auswirkt.

In vorteilhafter Weiterbildung der Erfindung kann der stabförmigen Abschnitt eines randseitigen Zinkenelements im Querschnitt rund ausgebildet sein. Alternativ hierzu ist es auch möglich, dass der stabförmige Querschnitt eines randseitigen Zinkenelements im Querschnitt mehreckig, beispielsweise quadratisch, oder polygonförmig ausgebildet ist. Jedenfalls ist der stabförmige Querschnitt des randseitigen Zinkenelements in der Weise ausgebildet, dass, wenn die Befestigungsmittel deaktiviert bzw. gelöst sind, dann ein Verdrehen des randseitigen Zinkenelements um die Längsachse seines stabförmigen Abschnitts relativ zur Rahmeneinrichtung und vorzugsweise innerhalb der Aufnahmeeinrichtung möglich ist, um ein Verstellen zwischen der Betriebsposition und der Transportposition zu erreichen.

In Abhängigkeit der Formgebung des Querschnitts des stabförmigen Abschnitts eines randseitigen Zinkenelements kann dieses zwischen der Betriebsposition und der Transportposition der landwirtschaftlichen Bodenbearbeitungsmaschine durch ein Verdrehen um die Längsachse seines stabförmigen Abschnitts um 45-180° verstellt werden. Falls der Querschnitt des stabförmigen Abschnitts quadratisch ausgebildet ist, erfolgt eine solche Verstellung zwischen der Betriebsposition und der Transportposition durch eine Drehung um die Längsachse von 90°.

Im Zusammenhang mit einer möglichen rechteckigen oder mehreckigen Ausgestaltung des Querschnitts des stabförmigen Abschnitts eines randseitigen Zinkenelements darf darauf hingewiesen werden, dass sich dies vorteilhaft auf eine betriebssichere Klemmung in der Betriebsposition der landwirtschaftlichen Bodenbearbeitungsmaschine auswirkt, wenn der stabförmige Abschnitt dieses randseitigen Zinkenelements formschlüssig in der Aufnahmeeinrichtung durch die Befestigungsmittel festgeklemmt bzw. verspannt wird.

Die vorliegende Erfindung sieht weiterhin eine landwirtschaftliche Bodenbearbeitungsmaschine vor, insbesondere in Form einer Sämaschine und/oder einer Düngemaschine, bei der die vorstehend erläuterte Zustreich- und Einebnungseinrichtung zum Einsatz kommt.

Nachstehend sind verschiedene Ausführungsformen der Erfindung anhand schematisch vereinfachten Zeichnung im Detail beschrieben.

Es zeigen:
- Fig. 1, 3: jeweils eine Draufsicht auf eine erfindungsgemäße Zustreich- und Einebnungseinrichtung, wenn diese an einer landwirtschaftlichen Bodenbearbeitungsmaschine in einer Transportposition angebracht ist,
- Fig. 2, 4: jeweils eine Draufsicht auf eine erfindungsgemäße Zustreich- und Einebnungseinrichtung, wenn diese an einer landwirtschaftlichen Bodenbearbeitungsmaschine in einer Betriebsposition angebracht ist,
- Fig. 5: einen Teilbereich eines randseitigen Zinkenelements der Zustreich- und Einebnungseinrichtung gemäß Fig. 1-4,
- Fig. 6: einen Teilbereich eines randseitigen Zinkenelements der Zustreich- und Einebnungseinrichtung gemäß Fig. 1-4,
- Fig. 7, 8: jeweils einen Querschnitt durch einen stabförmigen Abschnitt eines randseitigen Zinkenelements der Zustreich- und Einebnungseinrichtung gemäß Fig. 1-4,
- Fig. 9: eine Perspektivansicht der landwirtschaftlichen Bodenbearbeitungsmaschine von Fig. 2 in ihrer Betriebsposition,
- Fig. 10: eine Perspektivansicht der landwirtschaftlichen Bodenbearbeitungsmaschine von Fig. 1 in ihrer Transportposition,
- Fig. 11: eine Perspektivansicht eines Randbereichs der erfindungsgemäßen Zustreich- und Einebnungseinrichtung, wobei ein randseitiges Zinkenelement in einer Betriebsposition für eine landwirtschaftliche Bodenbearbeitungsmaschine angeordnet ist, und
- Fig. 12, 13: jeweils Perspektivansichten eines Randbereichs der erfindungsgemäßen Zustreich- und Einebnungseinrichtung, bei denen ein randseitiges Zinkenelement in einer Transportposition für eine landwirtschaftliche Bodenbearbeitungsmaschine angeordnet ist.

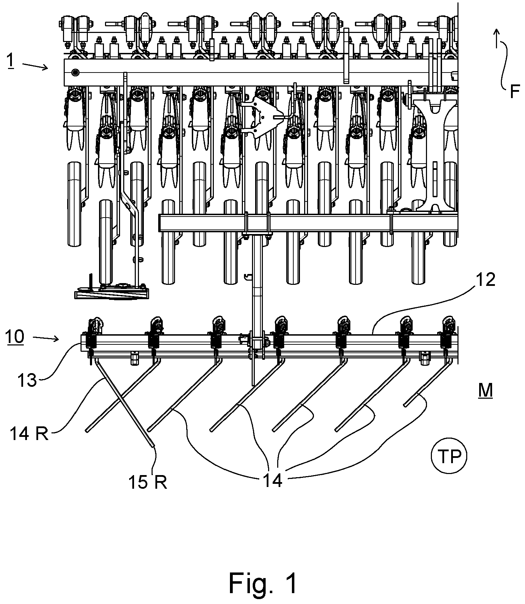

Nachstehend sind unter Bezugnahme auf die Fig. 1-13 bevorzugte Ausführungsformen einer erfindungsgemäßen Zustreich- und Einebnungseinrichtung 10 (nachfolgend nur kurz als "Einrichtung" bezeichnet) dargestellt und erläutert, die in Verbindung mit einer landwirtschaftlichen Bodenbearbeitungsmaschine 1 (nachfolgend auch kurz als "Maschine" bezeichnet) verwendet wird. Gleiche Merkmale in der Zeichnung sind jeweils mit gleichen Bezugszeichen versehen. An dieser Stelle wird gesondert darauf hingewiesen, dass die Zeichnung lediglich vereinfacht und insbesondere ohne Maßstab dargestellt ist.

Die erfindungsgemäße Einrichtung 10 umfasst eine längliche Rahmeneinrichtung 12, an der eine Mehrzahl von Zinkenelementen 12 angebracht sind. An einem jeweiligen Rand 13 der Rahmeneinrichtung 12, d.h. ganz links und ganz rechts an der Rahmeneinrichtung 12 bzw. angrenzend hierzu sind randseitige Zinkenelemente 14R angebracht.

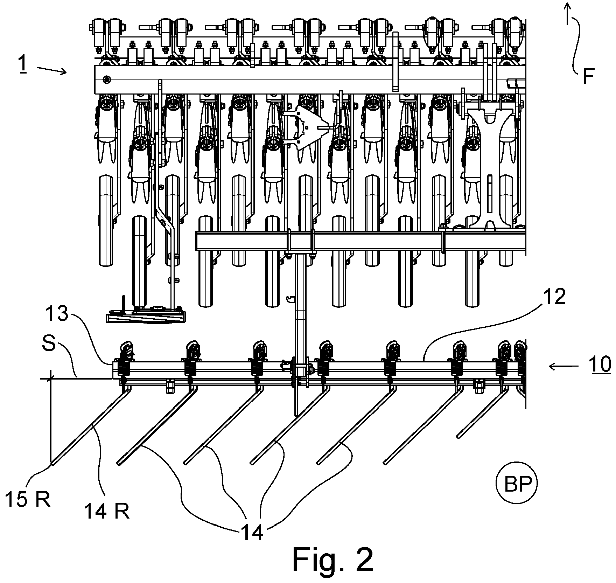

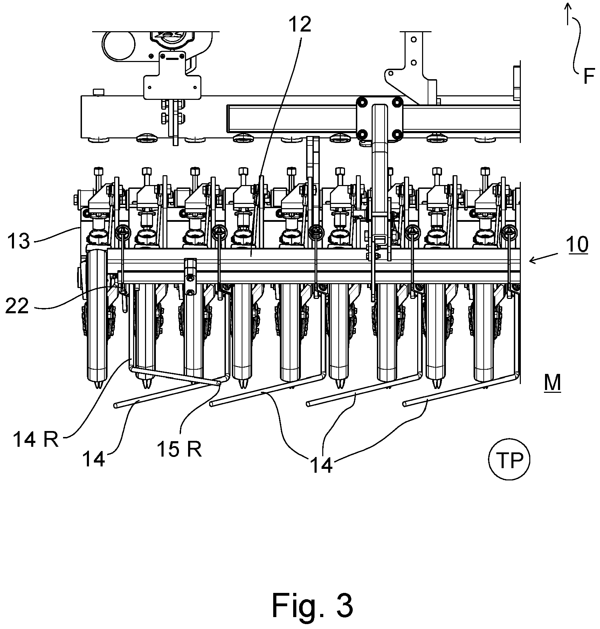

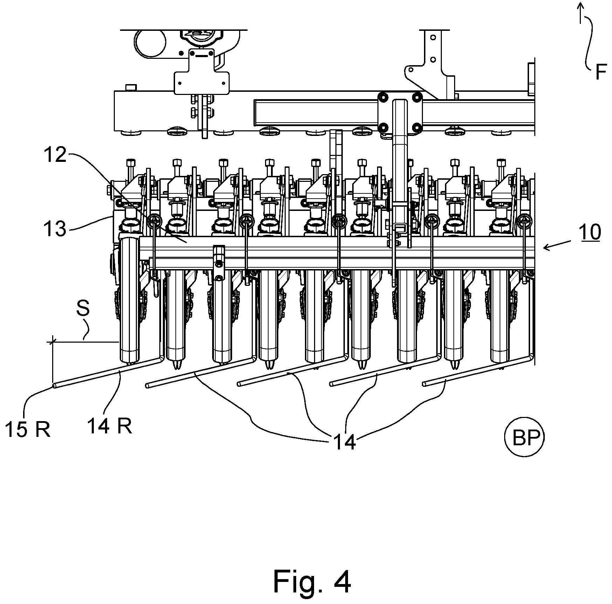

In den Darstellungen von Fig. 1 und 2, und weiterhin in der Darstellung von Fig. 3 und 4, ist jeweils in Draufsicht ein Teil einer landwirtschaftlichen Bodenbearbeitungsmaschine 1 gezeigt, an der die erfindungsgemäße Einrichtung 10 angebracht ist. Zur Vereinfachung zeigen diese Draufsichten jeweils nur einen linken Bereich der Maschine 1 bzw. Einrichtung 10, wobei mit "M" eine Mitte der Rahmeneinrichtung 12 symbolisiert ist. Diesbezüglich versteht sich, dass die Maschine 1 bzw. die Einrichtung 10 bezüglich dieser Mitte "M" achsensymmetrisch ausgebildet ist, wobei der (nicht gezeigte) rechts von der Mitte M gelegene Bereich in gleicher Weise wie der in den Fig. 1-4 gezeigte Bereich ausgebildet ist.

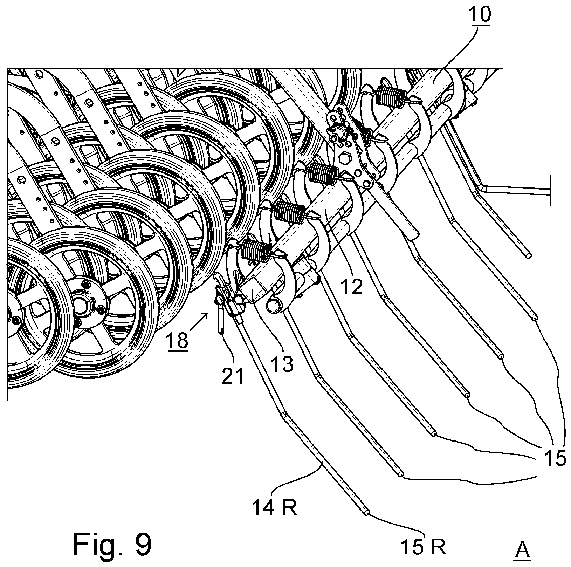

In den Fig. 1-4 ist eine Fahrtrichtung der Maschine 1, in der sie über eine Ackerfläche A (vgl. auch Fig. 9) gefahren bzw. bewegt wird, jeweils mit "F" bezeichnet. In diesem Zusammenhang wird durch die Fig. 1-4 verdeutlicht, dass sich die Rahmeneinrichtung 12 der Einrichtung 10 quer zur Fahrtrichtung F erstreckt.

In den Fig. 2 und 4 ist eine Maschine 1 jeweils in einer Betriebsposition gezeigt, die mit "BP" symbolisiert ist. In dieser Betriebsposition BP können die unteren freien Enden 15 der Zinkenelemente 14 und die freien Enden 14R der randseitigen Zinkenelemente 14R in Kontakt mit der Ackerfläche A gebracht werden.

Für die Betriebsposition BP der Maschine 1 ist charakteristisch, dass hierbei ein unteres freies Ende 15R eines randseitigen Zinkenelements 14R seitlich über den Rand 13 der Rahmeneinrichtung 12 hinausragt. In den Darstellungen von Fig. 2 und Fig. 4 ist dies für das randseitige Zinkenelement 14R, das - in Fahrtrichtung F gesehen - am linken Rand der Rahmeneinrichtung 12 angebracht ist, beispielhaft durch die Strecke "S" symbolisiert. Am (nicht gezeigten) rechten Rand der Rahmeneinrichtung 12 ist dies für ein dort angebrachtes randseitiges Zinkenelement identisch der Fall. Somit ragen die beiden randseitigen Zinkenelemente 14R über die Breite der Rahmeneinrichtung 12 seitlich hinaus. Hierdurch ist es möglich, beim Einsatz der Maschine 1 auf der Ackerfläche A eine ebene Anschlussfahrt zu erreichen, indem durch ein randseitiges Zinkenelement 14R ein (Erd-)Damm, der bei einer Anschlussfahrt entsteht, dann wieder eingeebnet wird.

Im Hinblick auf die Benutzung auf öffentlichen Straßen kann die Maschine 1 zur Verminderung ihrer Breite in eine Transportposition überführt werden, die in den Darstellungen von Fig. 1 und Fig. 3 jeweils mit "TP" bezeichnet ist.

Für die Transportposition TP ist charakteristisch, dass die beiden randseitigen Zinkenelemente 14R relativ zur Rahmeneinrichtung 12 derart verstellt sind, dass ihre jeweils unteren freien Enden 14R über den zugeordneten Rand 13 der Rahmeneinrichtung 12 nicht weiter seitlich hinausragen. Dies kann dadurch erreicht werden, dass die unteren freien Enden 14R in Richtung der Mitte M der Rahmeneinrichtung ausgerichtet sind, wie dies in den Draufsichten von Fig. 1 und Fig. 3 ersichtlich ist. Durch eine solche Ausrichtung bzw. Verstellung der randseitigen Zinkenelemente 14R wird vorteilhaft eine Verminderung der Breite der Einrichtung 10 und damit auch der Maschine 1 erreicht, vorzugsweise auf ein Maß von < 3 Meter, was einen Einsatz auf öffentlichen Straßen ermöglicht.

Nachfolgend sind Einzelheiten in Bezug auf ein randseitiges Zinkenelement 14R und dessen Anbringung bzw. Verstellbarkeit an der Rahmeneinrichtung 12 im Detail erläutert.

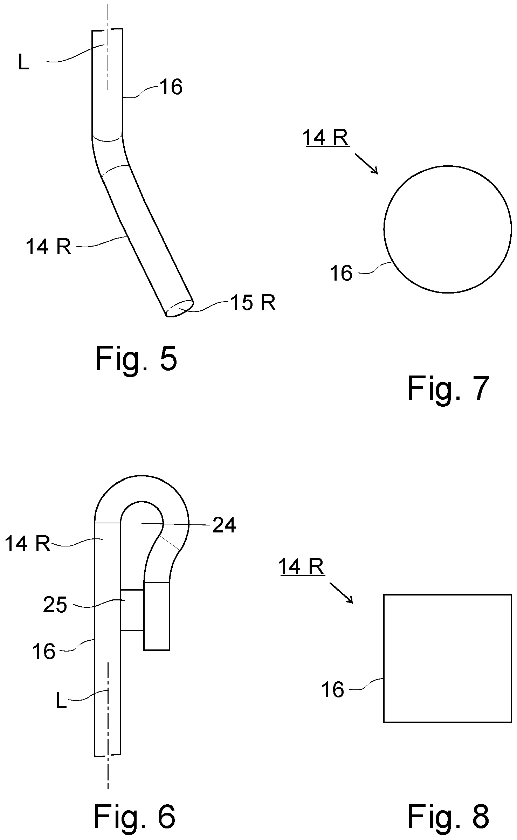

Ausweislich der Fig. 5 weist ein randseitiges Zinkenelement 14R einen stabförmigen Abschnitt 16 auf, vorzugsweise entgegensetzt zum unteren freien Ende 15R. Mit "L" ist eine Längsachse des stabförmigen Abschnitts 16 bezeichnet.

Weiterhin kann für das randseitige Zinkenelement 14R, wie auch für die übrigen Zinkenelemente 14, vorgesehen sein, dass in einem mittigen Bereich hiervon eine Krümmung ausgebildet ist.

Der Querschnitt des stabförmigen Abschnitts 16 kann rund (vgl. Fig. 7) oder quadratisch (vgl. Fig. 8) ausgebildet sein. Abweichend hiervon ist es auch möglich, dass der stabförmige Abschnitt in seinem Querschnitt rechteckig, mehreckig oder polygonförmig ausgebildet ist.

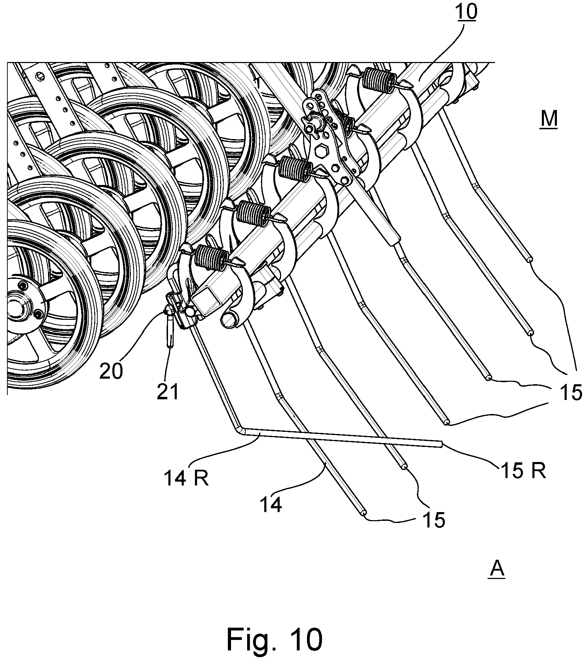

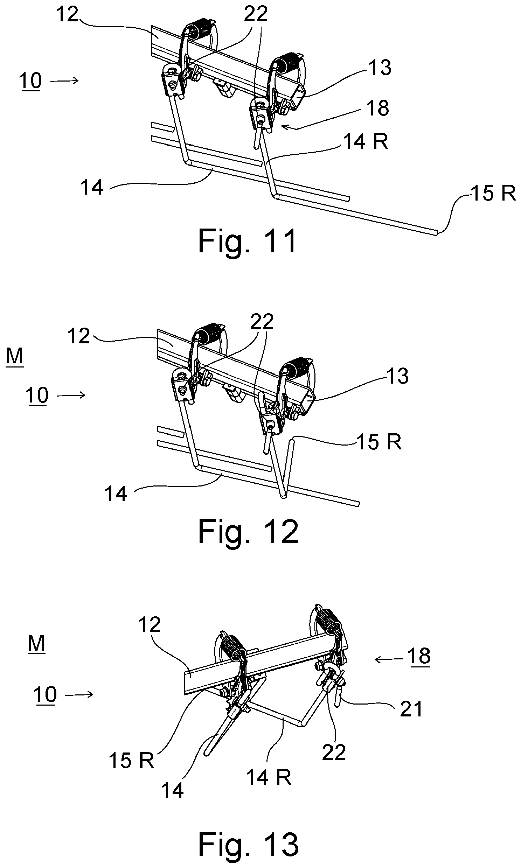

Die Einrichtung 10 umfasst Befestigungsmittel 18 (vgl. Fig. 11, Fig. 13), die an einer an der Rahmeneinrichtung 12 angebrachten Aufnahmeeinrichtung 22 vorgesehen sind. Diese Befestigungsmittel 18 können in Form einer Mutter 20 und eines damit verbundenen Betätigungshebels 21 (vgl. Fig. 10, Fig. 13) ausgebildet sein.

Die Darstellung in Figur 6 verdeutlicht, dass das randseitige Zinkenelement 14R an seinem oberen freien Ende, angrenzend zu dem stabförmigen Abschnitt 16, umgebördelt oder umgebogen ist, derart, dass sich dadurch ein flächiger Anlagebereich 24 bildet. Hierbei verläuft ein Endbereich des flächigen Anlagebereichs 24 etwa parallel zur Längsachse L des stabförmigen Abschnitts 16, wobei die Längsachse L des stabförmigen Abschnitts 16 und eine Mittellinie des Anlagebereichs 24 eine gemeinsame Ebene bilden.

In der Aufnahmeeinrichtung 22 können (nicht gezeigte) Vertiefungen ausgebildet sein, in denen die geraden bzw. sich parallel erstreckenden Teile des umgebogenen Bereichs des randseitigen Zinkenelements 14R an seinem oberen freien Ende aufgenommen sein können. Diesbezüglich versteht sich, dass die Kontur dieser Vertiefungen an den Querschnitt des randseitigen Zinkenelements 14R in dem Anlagebereich 24 angepasst ist.

Alternativ zu den genannten Vertiefungen ist es für die Aufnahmeeinrichtung 22 möglich, dass darin zumindest eine Erhebung 25 (vgl. Fig. 6) ausgebildet ist.

Wenn das randseitige Zinkenelement 14R mit dem an seinem oberen Ende durch die Umbördelung ausgebildeten Anlagebereich 24 in der Aufnahmeeinrichtung 22 aufgenommen ist, durchgreift diese Erhebung 25 die sich parallel zueinander erstreckenden Teile des umgebördelten Bereichs, wodurch sich ebenfalls ein Formschluss zwischen diesem Bereich und der Aufnahmeeinrichtung 22 einstellt, wenn das randseitige Zinkenelement 14R darin in der Betriebsposition BP der Maschine 1 festgelegt ist.

Das Verstellen eines randseitigen Zinkenelements 14R zwischen der Betriebsposition BP und der Transportposition TP der Maschine 1 funktioniert nun wie folgt:
In der Betriebsposition BP der Maschine 1 ist das randseitige Zinkenelement 14R in der Aufnahmeeinrichtung 22 aufgenommen, derart, dass die geraden bzw. sich parallel erstreckenden Teile des umgebördelten Bereichs des randseitigen Zinkenelements 14R in den genannten Vertiefungen der Aufnahmeeinrichtung 22 aufgenommen sind. Hierbei ist die Mutter 20, als Klemmmittel, derart angezogen, dass der umgebördelte Bereich des randseitigen Zinkenelements 14R formschlüssig in der Aufnahmeeinrichtung 22 verklemmt ist. Hierdurch wird das randseitige Zinkenelement 14R sowohl in Bezug auf dessen Umfang als auch entlang der Längsachse L des stabförmigen Abschnitts 16 rutschsicher in der Aufnahmeeinrichtung 22 gehalten, wie es ergänzend auch in der Perspektivansicht von Fig. 9 (= Betriebsposition BP der Maschine 1, analog zur Darstellung von Fig. 2) gezeigt ist. Insbesondere Torsionskräfte, die beim Kontakt des unteren freien Endes 15R mit der Ackerfläche A auf das randseitige Zinkenelement 14R einwirken können, werden durch diesen Formschluss des Anlagebereichs 24 mit der Aufnahmeeinrichtung 22 wirkungsvoll in die Rahmeneinrichtung abgeleitet, ohne dass die Gefahr eines Verdrehens bzw. Verrutschens des randseitigen Zinkenelements 14R besteht.

Zum Überführen des randseitigen Zinkenelements 14R in die Transportposition TP wird zunächst die Mutter 20 durch ein Verdrehen des Betätigungshebels 21 gelöst, derart, dass der Anlagebereich 24 sich aus den Vertiefungen der Aufnahmeeinrichtung 22 (bzw. von der Erhebung 25) abheben lässt. Anschließend kann das randseitige Zinkenelement 14R innerhalb der Aufnahmeeinrichtung 22 um die Längsachse L seines stabförmigen Abschnitts 16 verdreht werden, derart, dass dann sein unteres freies Ende 15R in Richtung der Mitte M der Rahmeneinrichtung 12 weist und jedenfalls nicht weiter über den Rand 13 der Rahmeneinrichtung 12 hinausragt. Durch ein solches Verdrehen des randseitigen Zinkenelements 14R um die Längsachse L seines stabförmigen Abschnitts 16 wird es in die Transportposition TP überführt, wie es auch in der Darstellung von Fig. 10, Fig. 12 und Fig. 13 jeweils veranschaulicht ist.

Im Hinblick auf das Verdrehen des randseitigen Zinkenelements 14R zwischen der Betriebsposition BP und der Transportposition TP ist für die vorliegende Erfindung von Bedeutung, dass das randseitige Zinkenelement 14R mit seinem stabförmigen Abschnitt 16 derart in der Aufnahmeeinrichtung 22 angebracht ist, dass die Längsachse L des stabförmigen Abschnitts 16 im Wesentlichen aufrecht verläuft. Dies bedeutet, dass ein Verdrehen des randseitigen Zinkenelements 14R, nachdem die Mutter 20 durch den Betätigungshebel 21 geeignet gelöst worden ist, dann um eine aufrechte bzw. lotrechte Achse erfolgt. In dieser Weise wird eine gewünschte große Positionsänderung für das untere freie Ende 14R des randseitigen Zinkenelements 14R erreicht, um nicht weiter über den Rand 13 der Rahmeneinrichtung 12 seitlich hinausragen.

Nach Erreichen der Transportposition TP kann das randseitige Zinkenelement 14R durch ein erneutes Verdrehen des Betätigungshebels 21 und der damit verbundenen Mutter 20 wiederum in der Aufnahmeeinrichtung 22 fixiert bzw. geklemmt werden. In diesem Zustand ist dann die Maschine 1 für einen Einsatz auf öffentlichen Straßen fahrbereit.

Ein Überführen des randseitigen Zinkenelements 14R von der Transportposition TP zurück in die Betriebsposition BP geschieht in umgekehrter Reihenfolge, wie erläutert.

Durch den Betätigungshebel 21 und ein geeignetes Verspannen der Mutter 20 ist sichergestellt, dass das randseitige Zinkenelement 14R ohne die Notwendigkeit von separatem Werkzeug wahlweise in der Betriebsposition BP oder in der Transportposition TP innerhalb der Aufnahmeeinrichtung 22 geklemmt werden kann. Damit ist ein "werkzeugfreies" Verstellen des randseitigen Zinkenelements 14R zwischen der Betriebsposition BP und der Transportposition TP gewährleistet.

### BEZUGSZEICHENLISTE

| | |
|---|---|
| 1 | landwirtschaftliche Bodenbearbeitungsmaschine |
| 10 | Zustreich- und Einebnungseinrichtung |
| 12 | Rahmeneinrichtung (der Zustreich- und Einebnungseinrichtung 10) |
| 13 | Rand (der Rahmeneinrichtung 12) |
| 14 | Zinkenelement(e) |
| 14R | randseitiges Zinkenelement |
| 15 | unteres freies Ende (eines Zinkenelements 14 |
| 15R | unteres freies Ende (eines randseitigen Zinkenelements 14R) |
| 16 | stabförmiger Abschnitt (eines randseitigen Zinkenelements 14R) |
| 18 | Befestigungsmittel |
| 20 | Mutter |
| 21 | Betätigungshebel |
| 22 | Aufnahmeeinrichtung |
| 24 | flächiger Anlagebereich |
| 25 | Erhebung |
| A | Ackerfläche |
| BP | Betriebsposition (BP) (der landwirtschaftlichen Maschine 1) |
| F | Fahrtrichtung (der landwirtschaftlichen Maschine 1) |
| L | Längsachse (des stabförmiger Abschnitts 16) |
| M | Mitte (der Rahmeneinrichtung 12) |
| TP | Transportposition (der landwirtschaftlichen Maschine 1) |

## Patentansprüche

1. Zustreich- und Einebnungseinrichtung (10) zur Verwendung mit einer landwirtschaftlichen Bodenbearbeitungsmaschine (1), umfassend eine längliche Rahmeneinrichtung (12), die sich quer zur einer Fahrtrichtung (F) der landwirtschaftlichen Bodenbearbeitungsmaschine (1) erstreckt, eine Mehrzahl von Zinkenelementen (14), die entlang der Rahmeneinrichtung (12) angebracht sind und mit ihren jeweils unteren freien Enden (15) in einer Betriebsposition (BP) der landwirtschaftlichen Bodenbearbeitungsmaschine (1) in Kontakt mit einer Ackerfläche (A) bringbar sind, wobei in der Betriebsposition (BP) der landwirtschaftlichen Bodenbearbeitungsmaschine (1) randseitige Zinkenelemente (14R), die an der Rahmeneinrichtung (12) ganz links bzw. ganz rechts an einem Rand (13) der Rahmeneinrichtung (12) oder angrenzend hierzu angebracht sind, mit ihren unteren freien Enden (15R) über den Rand (13) der Rahmeneinrichtung (12) in Richtung von deren Längserstreckung hinausragen,
**dadurch gekennzeichnet,**
**dass** zumindest ein randseitiges Zinkenelement (14R) in einem Abschnitt (16) angrenzend zu seiner Anbringung an der Rahmeneinrichtung (12) stabförmig ausgebildet ist, wobei dieses randseitige Zinkenelement (14R) ausgehend von der Betriebsposition (BP) der landwirtschaftlichen Bodenbearbeitungsmaschine (1) um eine vorzugsweise aufrecht verlaufende Längsachse (L) seines stabförmigen Abschnitts (16) verdrehbar ist, um dadurch für die landwirtschaftliche Bodenbearbeitungsmaschine (1) eine Transportposition (TP) zu erreichen, in der das untere freie Ende (15R) des randseitigen Zinkenelements (15R) über den zugeordneten Rand (13) der Rahmeneinrichtung (12) nicht seitlich hinausragt und/oder in Richtung einer Mitte (M) der Rahmeneinrichtung (12) ausgerichtet ist.

2. Zustreich- und Einebnungseinrichtung (10) nach Anspruch 1, **gekennzeichnet durch** Befestigungsmittel (18), mit denen ein randseitiges Zinkenelement (14R) sowohl in der Betriebsposition (BP) als auch in der Transportposition (TP) der landwirtschaftlichen Bodenbearbeitungsmaschine (1) bezüglich der Rahmeneinrichtung (12) lösbar festlegbar ist.

3. Zustreich- und Einebnungseinrichtung (10) nach Anspruch 2, **dadurch gekennzeichnet, dass** die Befestigungsmittel (18) werkzeugfrei betätigbar sind, vorzugsweise, dass die Befestigungsmittel (18) als Klemm- oder Spannmittel ausgebildet sind, weiter vorzugsweise, dass die Befestigungsmittel in Form einer Handschraube oder -mutter mit einem Betätigungshebel (21) oder in Form einer Flügelschraube oder -mutter ausgebildet sind.

4. Zustreich- und Einebnungseinrichtung (10) nach Anspruch 2 oder 3, **dadurch gekennzeichnet**, **dadurch gekennzeichnet, dass** die Befestigungsmittel (18) an einer an der Rahmeneinrichtung (12) angebrachten Aufnahmeeinrichtung (22) vorgesehen sind, wobei das randseitige Zinkenelement (14R), zumindest wenn die Befestigungsmittel (18) gelöst sind, innerhalb der Aufnahmeeinrichtung (22) mit seinem stabförmigen Abschnitt (16) um seine Längsachse (L) verdrehbar aufgenommen ist

5. Zustreich- und Einebnungseinrichtung (10) nach Anspruch 4, **dadurch gekennzeichnet, dass** das randseitige Zinkenelement (14R), wenn die Befestigungsmittel (18) aktiviert sind, mittels der Aufnahmeeinrichtung (22) festgelegt oder festgeklemmt ist, derart, dass ein Bewegen des randseitigen Zinkenelements (14R) um die Längsachse (L) des stabförmigen Abschnitts (16) blockiert ist, vorzugsweise derart, dass ein Bewegen des randseitigen Zinkenelements (14R) entlang der Längsachse (L) des stabförmigen Abschnitts (16) blockiert ist.

6. Zustreich- und Einebnungseinrichtung (10) nach Anspruch 4 oder 5, **dadurch gekennzeichnet, dass** angrenzend an den stabförmigen Abschnitt (16) des randseitigen Zinkenelements (14R) vorzugsweise an einem oberen freien Ende davon sich ein Anlagebereich (24) fortsetzt und/oder ein flächiger Anlagebereich (24) ausgebildet ist, vorzugsweise, dass die Längsachse (L) des stabförmigen Abschnitts (16) des randseitigen Zinkenelements (14R) und eine Mittellinie des Anlagebereichs (24) eine gemeinsame Ebene bilden.

7. Zustreich- und Einebnungseinrichtung (10) nach Anspruch 6, **dadurch gekennzeichnet, dass** das randseitige Zinkenelement (14R) in der Betriebsposition (BP) der landwirtschaftlichen Bodenbearbeitungsmaschine (1) mit dem Anlagebereich (24) in der Aufnahmeeinrichtung (22) durch die Befestigungsmittel (18) festgeklemmt ist und in Folge des resultierenden Formschlusses zwischen dem Anlagebereich (24) und der Aufnahmeeinrichtung (22) eine Rotation des stabförmigen Abschnitts (16) des randseitigen Zinkenelements (14R) um seine Längsachse (L) blockiert ist.

8. Zustreich- und Einebnungseinrichtung (10) nach Anspruch 6 oder 7, **dadurch gekennzeichnet, dass** an der Rahmeinrichtung (12) ein Anschlagsbereich ausgebildet ist, wobei in der Betriebsposition (BP) der landwirtschaftlichen Bodenbearbeitungsmaschine (1) und insbesondere bei deren Bewegung in Fahrtrichtung (F) der Anlagebereich (24) des randseitigen Zinkenelements (14R) derart in Wechselwirkung mit dem Anschlagsbereich gelangt, dass dadurch ein Verdrehen des randseitigen Zinkenelements (14R) um die Längsachse (L) des stabförmigen Abschnitts (16) blockiert ist.

9. Zustreich- und Einebnungseinrichtung (10) nach einem der Ansprüche 6 bis 8, **dadurch gekennzeichnet, dass** der Anlagebereich (24) dadurch ausgebildet ist, dass das randseitige Zinkenelement (14R) an seinem oberen freien Ende umgebördelt oder gebogen ist, vorzugsweise, dass ein Endbereich des flächigen Anlagebereichs (24) etwa parallel zur Längsachse (L) des stabförmigen Abschnitts (16) des randseitigen Zinkenelements (14 R) verläuft.

10. Zustreich- und Einebnungseinrichtung (10) nach Anspruch 9, **dadurch gekennzeichnet, dass** in der Aufnahmeeinrichtung (22) zueinander parallel verlaufende Vertiefungen oder zumindest eine Erhebung ausgebildet sind, mit denen bzw. der die geraden bzw. sich parallel erstreckenden Teile des umgebördelten oder umgebogenen Bereichs des randseitigen Zinkenelements (14R) in der Betriebsposition (BP) der landwirtschaftlichen Bodenbearbeitungsmaschine (1) in Wechselwirkung bringbar sind, so dass damit das randseitige Zinkenelement (14 R) festgelegt ist.

11. Zustreich- und Einebnungseinrichtung (10) nach einem der vorhergehenden Ansprüche, **dadurch gekennzeichnet, dass** der stabförmige Abschnitt (16) des randseitigen Zinkenelements (14R) im Querschnitt rund ausgebildet ist.

12. Zustreich- und Einebnungseinrichtung (10) nach einem der Ansprüche 1 bis 10, **dadurch gekennzeichnet, dass** der stabförmige Abschnitt (16) des randseitigen Zinkenelements (14R) im Querschnitt mehreckig oder polygonförmig ausgebildet ist.

13. Zustreich- und Einebnungseinrichtung (10) nach Anspruch 12, **dadurch gekennzeichnet, dass** der stabförmige Abschnitt (16) des randseitigen Zinkenelements (14R) im Querschnitt quadratisch ausgebildet ist, wobei ein Überführen des randseitigen Zinkenelements (14R) von der Betriebsposition (BP) der landwirtschaftlichen Bodenbearbeitungsmaschine (1) in deren Transportposition (TP) durch ein Verdrehen um die Längsachse (L) des stabförmigen Abschnitts (16) des Zinkenelements um 45-180°, vorzugsweise um 90° erfolgt.

14. Zustreich- und Einebnungseinrichtung (10) nach einem der vorhergehenden Ansprüche, **dadurch gekennzeichnet, dass** beide randseitigen Zinkenelemente (14R), die an der Rahmeneinrichtung (12) jeweils ganz links und ganz rechts an deren Rand (13) oder angrenzend hierzu angebracht sind, jeweils um eine Längsachse (L) ihres stabförmigen Abschnitts (16) verdrehbar sind, um dadurch die landwirtschaftliche Bodenbearbeitungsmaschine (1) zwischen der Betriebsposition (BP) und der Transportposition (TP) zu verstellen.

15. Verfahren zum Einstellen einer Zustreich- und Einebnungseinrichtung (10) insbesondere nach einem der Ansprüche 1 bis 14 bei deren Verwendung mit einer landwirtschaftlichen Bodenbearbeitungsmaschine (1), bei dem zumindest ein randseitiges Zinkenelement (14R), das an einer länglichen Rahmeneinrichtung (12) an einem Rand (13) davon ganz links oder ganz rechts angebracht ist, um die Längsachse (L) eines stabförmigen Abschnitts (16) des randseitigen Zinkenelements (14R) verdreht wird, so dass dadurch für die landwirtschaftliche Bodenbearbeitungsmaschine (1) eine Transportposition (TP) erreicht wird, in der ein unteres freies Ende (15R) des randseitigen Zinkenelements (14R) über den zugeordneten Rand (13) der Rahmeneinrichtung (12) nicht seitlich hinausragt und/oder in Richtung einer Mitte (M) der Rahmeneinrichtung (12) ausgerichtet ist.

16. Landwirtschaftliche Bodenbearbeitungsmaschine (1), insbesondere Sämaschine und/oder Düngemaschine, mit einer Zustreich- und Einebnungseinrichtung (10) nach einem der Ansprüche 1 bis 14.

## Claims

1. A furrow covering and levelling device (10) for use with an agricultural soil cultivation machine (1), including a longitudinal frame device (12), which extends transversely to a travelling direction (F) of the agricultural soil cultivation machine (1), a plurality of tine elements (14), which are mounted along the frame device (12) and with their respective lower free ends (15) in an operating position (BP) of the agricultural soil cultivation machine (1), can be brought into contact with an area of arable land (A), wherein in the operating position (BP) of the agricultural soil cultivation machine (1), peripheral tine elements (14R), which are mounted on the frame device (12) on the very left or very right on an edge (13) of the frame device (12) or adjoining thereto, with their lower free ends (15R) protrude over the edge (13) of the frame device (12) in the direction of its longitudinal extent, **characterised in that** at least one peripheral tine element (14R) in a portion (16) adjoining its mounting on the frame device (12) is formed rod-shaped, wherein this peripheral tine element (14R), emanating from the operating position (BP) of the agricultural soil cultivation machine (1), can be twisted about a preferentially upright-extending longitudinal axis (L) of a rod-shaped portion (16) in order to thereby achieve for the agricultural soil cultivation machine (1) a transport position (TP), in which the lower free end (15R) of the peripheral tine element (15R) does not laterally protrude over the associated edge (13) of the frame device (12) and/or is oriented in the direction of a centre (M) of the frame device (12).

2. The furrow covering and levelling device (10) according to Claim 1, **characterised by** fastening means (18), with which a peripheral tine element (14R), both in the operating position (BP) and also in the transport position (TP) of the agricultural soil cultivation machine (1), can be releasably fixed with respect to the frame device (12).

3. The furrow covering and levelling device (10) according to Claim 2, **characterised in that** the fastening means (18) are actuatable without tools, preferentially **in that** the fastening means (18) are designed as clamping means, further preferentially **in that** the fastening means are formed in the form of a hand screw or nut with an actuation lever (21) or in the form of a wing screw or wingnut.

4. The furrow covering and levelling device (10) according to Claim 2 or 3, **characterised in that** the fastening means (18) are provided on a receiving device (22) mounted on the frame device (12), wherein the peripheral tine element (14R), at least when the fastening means (18) are loosened, is received within the receiving device (22) with its rod-shaped portion (16) so as to be rotatable about its longitudinal axis (L).

5. The furrow covering and levelling device (10) according to Claim 4, **characterised in that** the peripheral tine element (14R), when the fastening means (18) are activated, is fixed or clamped by means of the receiving device (22) in such a manner that moving the peripheral tine element (14R) about the longitudinal axis (L) of the rod-shaped portion (16) is blocked, preferentially in such a manner that moving the peripheral tine element (14R) along the longitudinal axis (L) of the rod-shaped portion (16) is blocked.

6. The furrow covering and levelling device (10) according to Claim 4 or 5, **characterised in that** adjoining the rod-shaped portion (16) of the peripheral tine element (14R), preferentially at an upper free end thereof, a contact region (24) continuous and/or a flat contact region (24) is formed, preferentially **in that** the longitudinal axis (L) of the rod-shaped portion (16) of the peripheral tine element (14R) and a centre line of the contact region (24) form a common plane.

7. The furrow covering and levelling device (10) according to Claim 6, **characterised in that** the peripheral tine element (14R) in the operating position (BP) of the agricultural soil cultivation machine (1) with the contact region (24) is clamped in the receiving device (22) by the fastening means (18) and as a consequence of the resulting positive locking connection between the contact region (24) and the receiving device (22) a twisting of the rod-shaped portion (16) of the peripheral tine element (14R) about its longitudinal axis (L) is blocked.

8. The furrow covering and levelling device (10) according to Claim 6 or 7, **characterised in that** on the frame device (12) a stop region is formed, wherein in the operating position (BP) of the agricultural soil cultivation machine (1) and in particular upon its movement in the travelling direction (F), the contact region (24) of the peripheral tine element (14R) enters into interaction with the stop region in such a manner that a twisting of the peripheral tine element (14R) about the longitudinal axis (L) of the rod-shaped portion (16) is thus blocked.

9. The furrow covering and levelling device (10) according to any one of the Claims 6 to 8, **characterised in that** the contact region (24) is formed **in that** the peripheral tine element (14R) at its upper free end is flanged over or bent over, preferentially **in that** an end region of the flat contact region (24) extends approximately parallel to the longitudinal axis (L) of the rod-shaped portion (16) of the peripheral tine element (14R).

10. The furrow covering and levelling device (10) according to Claim 9, **characterised in that** in the receiving device (22) depressions extending parallel to one another or at least one elevation are formed, with which the straight or parallel-extending parts of the flanged or bent-over region of the peripheral tine element (14R) in the operating position (BP) of the agricultural soil cultivation machine (1) can be brought into interaction so that the peripheral tine element (14R) is thus fixed.

11. The furrow covering and levelling device (10) according to any one of the preceding claims, **characterised in that** the rod-shaped portion (16) of the peripheral tine element (14R) is formed round in the cross-section.

12. The furrow covering and levelling device (10) according to any one of the Claims 1 to 10, **characterised in that** the rod-shaped portion (16) of the peripheral tine element (14R) is formed polygonal in the cross-section.

13. The furrow covering and levelling device (10) according to Claim 12, **characterised in that** the rod-shaped portion (16) of the peripheral tine element (14R) is formed square in the cross-section, wherein a transfer of the peripheral tine element (14R) from the operating position (BP) of the agricultural soil cultivation machine (1) into its transport position (TP) takes place by twisting the rod-shaped portion (16) of the tine element about the longitudinal axis (L) by 45-180°, preferentially by 90°.

14. The furrow covering and levelling device (10) according to any one of the preceding claims, **characterised in that** both peripheral tine elements (14R), which are each mounted on the frame device (12) on the very left and on the very right on its edge (13) or adjoining thereto, can each be twisted about a longitudinal axis (L) of its rod-shaped portion (16) in order to thereby adjust the agricultural soil cultivation machine (1) between the operating position (BP) and the transport position (TP).

15. A method for adjusting a furrow covering and levelling device (10) in particular according to any one of the Claims 1 to 14 when used with an agricultural soil cultivation machine (1), in which at least one peripheral tine element (14R), which is mounted on a longitudinal frame element (12) on an edge (13) thereof on the very left or on the very right, is twisted about the longitudinal axis (L) of a rod-shaped portion (16) of the peripheral tine element (14R) so that a transport position (TP) for the agricultural soil cultivation machine (1) is thereby achieved, in which a lower free end (15R) of the peripheral tine element (14R) does not laterally protrude over the associated edge (13) of the frame device (12) and/or is oriented in the direction of a centre (M) of the frame device (12).

16. The agricultural soil cultivation machine (1), in particular seeding machine, and/or fertilising machine, having a furrow covering and levelling device (10) according to any one of the Claims 1 to 14.

## Revendications

1. Dispositif de recouvrement et de nivellement (10), destiné à être utilisé en concomitance avec une machine agricole (1) de travail du sol, comprenant un système formant cadre (12) allongé, qui s'étend à la transversale d'une direction de déplacement (F) de la machine agricole (1) de travail du sol, une pluralité d'éléments à dent (14), qui sont montés le long du système formant cadre (12) et qui dans une position opérationnelle (BP) de la machine agricole (1) de travail du sol, sont susceptibles d'être amenés en contact par leurs extrémités libres (15) inférieures respectives avec une surface agricole (A), dans la position opérationnelle (BP) de la machine agricole (1) de travail du sol, des éléments à dent (14R) placés côté bord, qui sont montés sur le système formant cadre (12) à l'extrême gauche ou à l'extrême droite sur un bord (13) du système formant cadre (12) ou de manière adjacente à celui-ci, saillant par leurs extrémités libres (15R) inférieures au-delà du bord (13) du système formant cadre (12) en direction de l'extension longitudinale de celui-ci, **caractérisé en ce que** dans une portion (16) adjacente à son montage sur le système formant cadre (12), au moins un élément à dent (14R) placé du côté bord est conçu en forme de barre, en partant de la position opérationnelle (BP) de la machine agricole (1) de travail du sol, ledit élément à dent (14R) placé côté bord étant rotatif autour d'un axe longitudinal (L) s'écoulant de préférence à la verticale de sa portion (16) en forme de barre, pour atteindre de ce fait pour la machine agricole (1) de travail du sol une position de transport (TP), dans laquelle l'extrémité libre (15R) inférieure de l'élément à dent (15R) placé côté bord ne saillit pas latéralement au-delà du bord (13) associé du système formant cadre (12) et / ou est orientée en direction d'un centre (M) du système formant cadre (12).

2. Dispositif de recouvrement et de nivellement (10) selon la revendication 1, **caractérisé par** des moyens de fixation (18) à l'aide desquels, aussi bien dans la position opérationnelle (BP) qu'également dans la position de transport (TP) de la machine agricole (1) de travail du sol, un élément à dent (14R) placé côté bord est susceptible d'être immobilisé de manière amovible par rapport au système formant cadre (12).

3. Dispositif de recouvrement et de nivellement (10) selon la revendication 2, **caractérisé en ce que** les moyens de fixation (18) sont actionnables sans outil, de préférence **en ce que** les moyens de fixation (18) sont conçus sous la forme de moyens de blocage ou de serrage, de préférence par ailleurs, en que les moyens de fixation sont conçus sous la forme d'une mollette ou d'un écrou, pourvu(e) d'un levier d'actionnement (21) ou sous la forme d'une vis ou d'un écrou papillon.

4. Dispositif de recouvrement et de nivellement (10) selon la revendication 2 ou 3, **caractérisé en ce que** les moyens de fixation (18) sont prévus sur un système de logement (22) monté sur le système formant cadre (12), au moins lorsque les moyens de fixation (18) sont désolidarisés, par sa portion (16) en forme de barre, l'élément à dent (14R) placé côté bord étant logé à l'intérieur du système de logement (22), en étant rotatif autour de son axe longitudinal (L).

5. Dispositif de recouvrement et de nivellement (10) selon la revendication 4, **caractérisé en ce que** lorsque les moyens de fixation (18) sont activés, l'élément à dent (14R) placé côté bord, est immobilisé ou serré au moyen du système de logement (22), de telle sorte qu'un déplacement de l'élément à dent (14R) placé côté bord autour de l'axe longitudinal (L) de la portion (16) en forme de barre soit bloqué, de préférence de telle sorte qu'un déplacement de l'élément à dent (14R) le long de l'axe longitudinal (L) de la portion (16) en forme de barre soit bloqué.

6. Dispositif de recouvrement et de nivellement (10) selon la revendication 4 ou 5, **caractérisé en ce que** de manière adjacente à la portion (16) en forme de barre de l'élément à dent (14R) placé du côté bord, de préférence sur une extrémité supérieure libre de celui-ci se poursuit une zone d'appui (24) et / ou est conçue une zone d'appui (24) plane, de préférence, **en ce que** l'axe longitudinal (L) de la portion (16) en forme de barre de l'élément à dent (14R) placé du côté bord et une ligne médiane de la zone d'appui (24) forment un plan commun.

7. Dispositif de recouvrement et de nivellement (10) selon la revendication 6, **caractérisé en ce que** dans la position opérationnelle (BP) de la machine agricole (1) de travail du sol, l'élément à dent (14R) placé du côté bord est serré avec la zone d'appui (24) dans le système de logement (22) par les moyens de fixation (18) et par suite de la complémentarité de forme qui en résulte entre la zone d'appui (24) et le système de logement (22), une rotation autour de son axe longitudinal (L) de la portion (16) en forme de barre de l'élément à dent (14R) placé du côté bord est bloquée.

8. Dispositif de recouvrement et de nivellement (10) selon la revendication 6 ou 7, **caractérisé en ce que** sur le système formant cadre (12) est conçue une zone de butée, dans la position opérationnelle (BP) de la machine agricole (1) de travail du sol et notamment lors de son déplacement dans la direction de déplacement (F), la zone d'appui (24) de l'élément à dent (14R) placé du côté bord entrant en interaction avec la zone de butée, de telle sorte que de ce fait, une rotation de l'élément à dent (14R) placé du côté bord autour de l'axe longitudinal (L) de la portion (16) en forme de barre soit bloquée.

9. Dispositif de recouvrement et de nivellement (10) selon l'une quelconque des revendications 6 à 8, **caractérisé en ce que** la zone d'appui (24) est constituée **en ce que** l'élément à dent (14R) placé du côté bord est rabattu ou recourbé sur son extrémité libre supérieure, de préférence **en ce qu'**une zone d'extrémité de la zone d'appui (24) plane s'écoule approximativement à la parallèle de l'axe longitudinal (L) de la portion (16) en forme de barre de l'élément à dent (14R) placé du côté bord.

10. Dispositif de recouvrement et de nivellement (10) selon la revendication 9, **caractérisé en ce que** dans le système de logement (22) sont conçus des creux s'écoulant à la parallèle les uns des autres ou au moins une élévation, à l'aide desquelles ou de laquelle, dans la position opérationnelle (BP) de la machine agricole (1) de travail du sol, les parties droites ou s'étendant à la parallèle de la zone rabattue ou recourbée de l'élément à dent (14R) placé du côté bord sont susceptibles d'être amenées en interaction, de telle sorte que l'élément à dent (14R) placé du côté bord soit immobilisé de ce fait.

11. Dispositif de recouvrement et de nivellement (10) selon l'une quelconque des revendications précédentes, **caractérisé en ce que** la portion (16) en forme de barre de l'élément à dent (14R) placé du côté bord est conçue de forme ronde dans sa section transversale.

12. Dispositif de recouvrement et de nivellement (10) selon l'une quelconque des revendications 1 à 10, **caractérisé en ce que** la portion (16) en forme de barre de l'élément à dent (14R) placé du côté bord est conçue avec plusieurs angles ou de forme polygonale dans sa section transversale.

13. Dispositif de recouvrement et de nivellement (10) selon la revendication 12, **caractérisé en ce que** la portion (16) en forme de barre de l'élément à dent (14R) placé du côté bord est conçue de forme quadratique dans sa section transversale, un passage de l'élément à dent (14R) placé du côté bord de la position opérationnelle (BP) de la machine agricole (1) de travail du sol dans la position de transport (TP) de celle-ci s'effectuant par une rotation de la valeur de 45 à 180°, de préférence de 90° autour de l'axe longitudinal (L) de la portion (16) en forme de barre de l'élément à dent.

14. Dispositif de recouvrement et de nivellement (10) selon l'une quelconque des revendications précédentes, **caractérisé en ce que** les deux éléments à dent (14R) placés du côté bord, qui sont montés sur le système formant cadre (12) respectivement à l'extrême gauche ou à l'extrême droite sur le bord (13) de celui-ci ou en étant adjacents à celui-ci sont rotatifs respectivement autour d'un axe longitudinal (L) de leur portion (16) en forme de barre, pour ajuster de ce fait la machine agricole (1) de travail du sol entre la position opérationnelle (BP) et la position de transport (TP).

15. Procédé, destiné à régler un dispositif de recouvrement et de nivellement (10), notamment selon l'une quelconque des revendications 1 à 14, lors de son utilisation en concomitance avec une machine agricole (1) de travail du sol, lors duquel l'on fait tourner au moins un élément à dent (14R) placé du côté bord, qui est monté à l'extrême gauche ou à l'extrême droite sur un système formant cadre (12) allongé sur un bord (13) de celui-ci autour de l'axe longitudinal (L) d'une portion (16) en forme de barre de l'élément à dent (14R) placé du côté bord, de telle sorte que de ce fait soit atteinte pour la machine agricole (1) de travail du sol une position de transport (TP) dans laquelle une extrémité (15R) inférieure libre de l'élément à dent (14R) placé du côté bord ne saillisse pas latéralement au-delà du bord (13) associé du système formant cadre (12) et / ou soit orientée en direction d'un centre (M) du système formant cadre (12).

16. Machine agricole (1) de travail du sol, notamment semeuse et / ou fertiliseur, pourvue d'un dispositif de recouvrement et de nivellement (10) selon l'une quelconque des revendications 1 à 14.
